# EUROPÄISCHE PATENTSCHRIFT

(11) **EP 0 639 104 B1**
(45) Veröffentlichungstag und Bekanntmachung des Hinweises auf die Patenterteilung: **09.06.1999**
(21) Anmeldenummer: 93905303.9
(22) Anmeldetag: 05.03.1993
(51) Int. Cl.: B01D 50/00, B01D 47/12

(54) **VERFAHREN UND ANLAGE ZUR ABGASREINIGUNG, SOWIE KOMBINATION DIESER ABGASREINIGUNG MIT EINER ABWASSERREINIGUNG**
PROCESS AND PLANT FOR EXHAUST GAS PURIFICATION AND A COMBINATION OF THIS EXHAUST GAS PURIFICATION WITH THAT OF WASTE WATER
PROCEDE ET INSTALLATION POUR L'EPURATION DE GAZ D'EVACUATION, ET COMBINAISON DE CETTE EPURATION DE GAZ AVEC UNE EPURATION D'EAUX USEES

(43) Veröffentlichungstag der Anmeldung: 22.02.1995
(73) Patentinhaber: VOEST-ALPINE INDUSTRIEANLAGENBAU GESELLSCHAFT m.b.H., A-4031 Linz (AT)
(72) Erfinder: EBERT, Fritz, D-6750 Kaiserslautern (DE); BÜTTNER, Helmut, D-6660 Zweibrücken (DE); KRAMES, Jörg, D-6750 Kaiserslautern (DE); GEBERT, Walter, A-4502 St. Marien (AT); PARZERMAIR, Franz, A-4800 Attnang-Puchheim (AT); LANZERSDORFER, Christof, A-4600 Wels (AT)
(74) Vertreter: von Füner, Alexander, Prof.h.c. Dr.
(86) Internationale Anmeldenummer: EP9300502
(87) Internationale Veröffentlichungsnummer: WO9420196

(56) Entgegenhaltungen:
- WO-A-87/01963
- WO-A-93/00147
- AU-B- 496 281
- CA-A- 1 091 144
- DE-A- 3 507 536
- US-A- 3 782 074

## Beschreibung

Die Erfindung betrifft ein Verfahren und eine oder mehrere Anlagen zur Abtrennung fester und/oder flüssiger Partikel mit kleinem Durchmesser und/oder gasförmiger Komponenten aus einem Gasstrom mittels feinst zerstäubter Waschflüssigkeit. Um die weit verbreitete Forderung nach einem abwasserfreien Betrieb von Abgasreinigungsanlagen zu erfüllen, ist eine mehrstufige Kreislaufflüssigkeitsaufbereitung in das Verfahren integriert.

Die Erfindung ist speziell geeignet, den Abscheidegrad bestehender Massekraftpartikelabscheider oder Wäscher im Bereich der Feinstäube durch einfache Erweitetung im Sinne der Erfindung zu verbessern.

Konventionelle Massekraftpartikelabscheider wie beispielsweise Zyklone und Prallabscheider weisen für Partikel im unteren Micrometerbereich und Submicrometerbereich nur einen niedrigen Abscheidegrad auf Dies gilt auch für konventionelle Wäscher wie Rotationswäscher und Niederdruckventuriwäscher.

Naßarbeitende Partikelabscheider basieren auf dem Prinzip, daß sehr kleine Partikel, die aufgrund der geringen Massenkräfte mit konventionellen Trägheitsabscheidern nicht mehr abgeschieden werden können, durch Anlagerung von Flüssigkeit vergrößert werden. Der dabei aus Flüssigkeit und abzutrennender Partikel gebildetete Tropfen ist in der Regel so groß, daß er ohne Probleme aus dem Gasstrom entfernt werden kann. Ein naß arbeitender Partikelabscheider besteht demnach immer aus einem Bereich, in dem Tropfen und Partikel die Möglichkeit haben in Wechselwirkung zueinander zu treten, und aus einem Bereich, in dem die Tropfen abgeschieden werden, auch wenn - wie bei dieser Erfindung - die beiden Bereiche bei Einsatz eines Zyclons räumlich praktisch nicht voneinander getrennt sind.

Ferner ist aus der DE-C-30 18 162 ein Zyklonstaubabscheider bekannt, bei dem der Waschflüssigkeitszulauf über dem Gasaustritt einer inneren Kammer angeordnet ist, wodurch die aus dem inneren Abscheideraum trocken abziehende Abluft zum Abscheiden der noch in ihr vorhandenen feinsten Staubteilchen in den äußeren Abscheideraum geführt und gleichzeitig befeuchtet wird. Aus dem äußeren Abscheideraum werden die abgeschiedenen feuchten Staubteilchen abgeführt. Dadurch wird die in der inneren Kammer weitgehend gereinigte Abluft von noch vorhandenen Feinstaubteilchen vor Abflehen der Abluft ausgewaschen.

Die DE-A-32 42 651 beschreibt ein Verfahren zur Abtrennung trockener Flugasche aus einem heißen Gas mit 100 bis 2000 °C, wobei der größere Teil der Flugasche zuerst mit einem Zyklon abgeschieden und das Gas anschließend in mindestens zwei Stufen gewaschen wird Die in der ersten Stufe erhaltene wässrige Flugaschesuspension wird teilweise an einer Stelle vor dem Zyklon in das Ausgangsgas injiziert, um durch Temperatursenkung des Rohgases den Zyklonwirkungsgrad zu erhöhen. Der Zyklon selbst dient als Trockentrennschritt. Das Gas wird dabei jedoch nie unter den Taupunkt abgekühlt, das Produkt fällt trocken an.

In der DE-C-30 49 752 wird ein Staubabscheider beschrieben, in dem gleichzeitig eine kinematische Koagulation bei hoher Geschwindigkeit in einer Gaskanalverengung und eine Zentrifugalabscheidung stattfinden. Die Zuführung der Flüssigkeit erfolgt im Rohgaszulauf eines Zyklons. Nach der Zuführungsstelle verengt sich das bereits gekrümmte Zulaufrohr, um sich knapp vor dem Eintritt in den Zyklon wieder diffusorartig zu erweitern. Die Flüssigkeitszufuhr erfolgt dabei entweder über eine im Zulaufrohr angebrachte Brause oder über innenliegende Öffnungen im Zulaufrohr, die sich über den gesamten Querschnitt erstrecken.

Aus der US-A-3,696, 590 ist ein Gasreiniger bekannt, der in seinem Zulauf mehrere Quenchedüsen besitzt. Der Gasstrom wird nach der Feuchtigkeitsbeaufschlagung in einem 90° -Knie umgelenkt und passiert vor seinem Eintritt in den Zyklon einen Wirbeldämpfer. Die einzelnen Düsen sind getrennt voneinander beaufschlagbar.

Es ist bekannt, daß eine hohe Relativgeschwindigkeit zwischen Tropfen und abzuscheidender Partikel die Wahrscheinlichkeit für das Aufteffen der Partikel auf dem Tropfen vergrößert. Dieses Prinzip wird in Venturiwäschern angewandt. Der Gasstrom wird mittels einer Querschnittsverengung auf hohe Strömungsgeschwindigkeiten beschleunigt. Am engsten Querschnitt wird die Waschflüssigkeit zugegeben. Aufgrund der hohen Strömungsgeschwindigkeit zerfällt die Wassermenge in feine Tropfen, die nun im Gasstrom beschleunigt werden, bis sie ebenfalls Gasgeschwindigkeit besitzen. Je kleiner die Tropfen sind, desto schneller werden sie diese Geschwindigkeit erreichen und umso kürzer wird demnach die Zeit, in der zwischen Tropfen und Partikel eine nennenswerte Relativgeschwindigkeit besteht. Andererseits verbessert sich bei gegebener Waschflüssigkeitsmenge mit abnehmendem Tropfendurchmesser die Auftreffwahrscheinlichkeit einer Partikel an einem Tropfen.

So beschreibt die DE-C-23 05 710 einen Venturiwäscher mit einem axial-mittigen Einsatzkörper Dieser Wäscher weist zwei Zonen auf, in denen eine Relativbewegung zwischen den Flussigkeitströpfchen und dem Gas zu einem intensiven Kontakt zwischen den Medien führt, welche die Waschwirkung begünstigt.

Aus der DE-C-21 16 482 ist ein Naßabscheider bekannt, der aus einem Venturirohr besteht, in dessen Hals eine Zerstäuberdüse für Wasser angeordnet ist. Daran schließt ein Zentrifugalabscheider an. Durch die eingespritzte Flüssigkeit werden die Feststoffteilchen beschwert und durch die eingebauten Wirbelorgane tangential abgeschleudert.

Nachteilig bei diesen Wäschern ist der hohe Druckverlust, der über die Gebläseleistung kompensiert werden muß.

Desweiteren sind Verfahren bekannt, bei denen die Flüssigkeit mittels rotierender Einbauten (Scheiben, Trommel usw.) zerstäubt wird. Dadurch ergibt sich zwangsläufig ein relativ hoher apparativer als auch wartungstechnischer Aufwand.

In der US-A-4,067,703 sind eine Vorrichtung und ein Verfahren beschrieben, bei welchem der Wechselwirkungsraum im wesentlichen aus einer Rohrleitung besteht, die in ihrem Durchmesser und ihrer Länge so ausgelegt ist, daß sich eine ausgebildete Rohrturbulenz sowie eine verhältnismäßig lange Verweilzeit tur den Kontakt zwischen Partikel und Waschflüssigkeitstropfen einstellt. Die Waschflüssigkeit wird mittels einer Zweistoffdüse sehr fein in dem zu entstaubenden Gasstrom verteilt. Die mit Staub beladenen Tropfen werden in einem Abscheider abgetrennt, der um ein Zentrifugalgebläse aufgebaut ist. Die Düse ist im Gasstrom angeordnet, wobei zwischen der Düse und dem Gebläse eine minimale Distanz eingehalten werden muß, damit der Sprühkegel den Innenraum des Rohres komplett ausfüllt. Der Sprühzone schließt sich das Niederdruckgebläse an, welches nicht nur zur Förderung des Gasstromes dient, sondern den Kontaktraum für die Impaktion der Partikel über den Bereich des Rohres hinaus erweitert. Gleichzeitig soll dieses Gebläse die Koaleszenz der Wassertropfen begünstigen. Das Wasser läuft innerhalb des Gebläses durch ein Rohr mit Wasserverschluß in ein Schlammbecken.

Analog zu den vorher beschriebenen Verfahren mit rotierenden Einbauten treffen auf dieses Verfahren die gleichen Nachteile eines relativ hohen apparativen und wartungstechnischen Aufwandes zu.

In der WO-A-9300147 werden ein Verfahren und eine Anlage zur Gasreinigung mit einem großen Waschturm beschrieben, der mit Zweistoffdüsen ausgestattet ist. Diese Düsen sind über den gesamten Querschnitt des Wäschers verteilt angeordnet und können getrennt mit Zerstäubungsgas und Waschflüssigkeit angesteuert werden. Dadurch wird erreicht, daß über den gesamten Gasstromquerschnitt gleichmäßig eine entsprechende Menge an Waschflüssigkeit eingebracht wird.

Im DE-U-82 18 483 wird ein Zyklon beschrieben, in dessen Austrittsrohr Waschflüssigkeit eingedüst wird. Das Austrittsrohr ist also als Wäscher ausgebildet. Diese Anordnung nimmt jedoch keinen Bezug auf eine zweckmäßige Tropfenabscheidung.

Desweiteren ist ein Verfahren zum Entstauben der Abgase von Erz-, Sinter- und/oder Pelletieranlagen bekannt, bei welchem die Staube zumindest teilweise einer Aufbereitung auf naßchemischem Weg unterworfen werden und die Prozeßabwasser einer Reinigung unterworfen werden. Dieses Verfahren zielt darauf ab, aus den Prozeßabgasen neben anderem auch Metallverbindungen wie sie in derartigen Stäuben vorliegen, einer Wiederverwertung zu unterziehen. Gleichzeitig zielt dieses Verfahren darauf ab, ein weitestgehend gereinigtes Prozeßabwasser zu erzielen, welches sich in der Folge zur Rückführung als Waschflüssigkeit oder zur Herstellung von Aufschlämmungen eignet. Die zu reinigenden Gase werden dazu mit Waschflüssigkeit mit pH 0 bis 10 gewaschen, die Aufschlämmung der Stäube wird auf pH 3 bis 5 eingestellt und die Feststoffe abgefiltert, worauf das Filtrat einer Schwermetallfällung unterworfen wird und der Niederschlag abgetrennt wird. Danach verbleibt eine im wesentlichen lediglich Alkalihalogenide enthaltende Lösung, welche im Kreislauf geführt werden kann.

Der Erfindung liegt die Aufgabe zugrunde, ein zuverlässiges Verfahren sowie eine Anlage zur Durchführung des Verfahrens zu entwickeln, durch das neben üblichen Staubpartikeln und Schadgasen auch extrem feine Partikel mit einer Korngröße von kleiner 1,0 µm effizienter abgeschieden werden als dies mit den herkömmlichen Verfahren möglich ist und die dafür eingedüsten Waschflüssigkeitstropfen wieder vollständig aus dem Gasstrom zu entfernen.

Diese Aufgabe wird erfindungsgemäß durch ein Verfahren zur Abscheidung fester und/oder flüssiger und/oder gasförmigen Komponente gemäß Anspruch 1 gelöst.

Die Anmeldung betrifft weiterhin eine Anlage gemäß Anspruch 18.

Anlagen zur Durchführung des Verfahrens zeichnen sich durch ihre kompakte Bauweise aus. Das Verfahren ist speziell geeignet, um durch einfache Nachrüstungen in bestehende Massekraftpartikelabscheider oder Wäscher integriert zu werden und so deren Abscheidegrad für diese extrem feinen Partikel entscheidend zu verbessern.

Es ist außerdem ein abwasserfreier Betrieb der erfindungsgemäßen Anlagen durch die Aufarbeitung der Waschflüssigkeit möglich, wobei durch den erfindungsgemäßen Aufbau der notwendige Aufwand zur Aufarbeitung der ausgeschleusten Waschflüssigkeit und zur Entsorgung der festen Reststoffe minimiert wird und gleichzeitig in der Waschflüssigkeit enthaltene Wertstoffe rückgewonnen werden können.

Ausführungsbeispiele der Erfindung werden nachstehend anhand der Zeichnungen näher erläutert. Es zeigt:
- Fig. 1: eine erste Ausführungsform einer Anlage zur Durchführung des erfindungsgemäßen Verfahrens mit einem tangential angeströmten Zyklon als Partikelabscheideaggregat;
- Fig. 2: die Einzelheit II von Fig. 1;
- Fig. 3: eine zweite Ausführungsform einer Anlage zur Durchführung des erfindungsgemäßen Verfahrens mit einem Venturiwäscher als Partikelabscheideaggregat;
- Fig. 4: eine dritte Ausführungsform einer Anlage zur Durchführung des erfindungsgemäßen Verfahrens mit integrierter Waschflüssigkeitsaufbereitung;
- Fig. 5: eine Trennkurve, die den Einfluß der Zweistoffdüsen auf das Abscheideergebnis zeigt;
- Fig. 6: eine Trennkurve der Anlage von Fig. 1 mit einer pneumatischen Zweistoffdüse mit innerer Mischung.

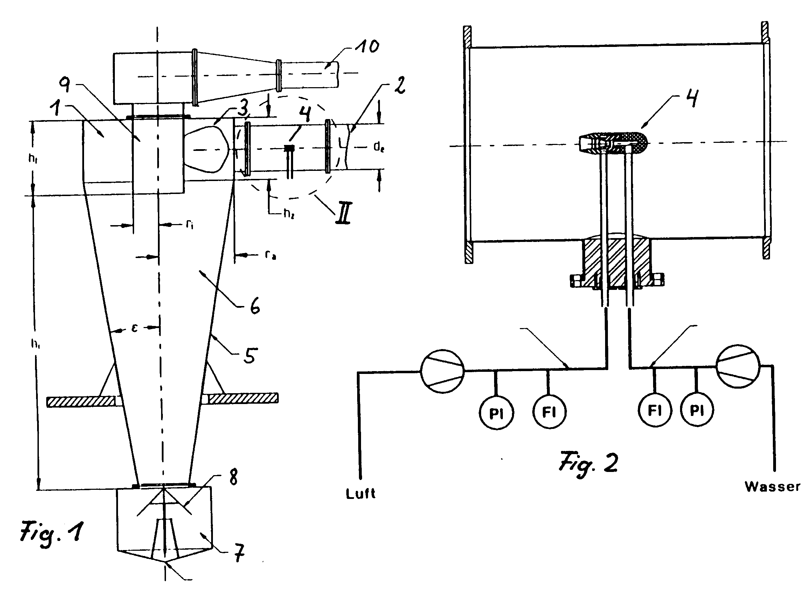

Die Ausführungsformen gemäß den Figuren 1-3 sind keine Anlagen gemäß der Erfindung.

Bei der in Fig. 1 gezeigten Anlage gelangt der Rohgasstrom durch eine Rohrleitung (2) und den Zykloneintritt (3) in den Zyklon (1). Auf diesem Weg wird der Rohgasstrom mit Waschwassertropfen angereichert, die von einer oder mehreren pneumatischen Zweistoffdüsen (4) (Fig. 2) erzeugt werden. Da die im Gleichstrom eingedüsten Tropfen mit höherer Geschwindigkeit als der Rohgasgeschwindigkeit den Düsenaustrittsbereich verlassen, können Partikel aufgrund von Trägheitseffekten an den Tropfen abgeschieden werden. Tritt der Sprühnebel in den Zyklon ein, so wird er gemäß den Strömungsverhältnissen im Zyklon abgelenkt. Im Bereich des Zykloneintritts besitzen bevorzugt die feinen Partikel eine erhöhte Auftreffwahrscheinlichkeit an den Tropfen, da diese Partikel sich je nach Trägheit den Schwankungsbewegungen der turbulenten Gasstromung leichter anpassen können als größere Partikel Die Effektivität dieser turbulenten Agglomeration, die nicht nur auf den Zykloneinlaufbereich beschränkt ist, sondern im ganzen Zyklon wirksam ist, hängt zum einen von den Strömungsverhältnissen innerhalb des Zyklons und zum anderen - wie aus eigenen Versuchen hervorgeht - von der Qualität der Zerstäubungseinrichtung ab, d.h. von dem erzeugten Tropfenkollektiv.

Tritt dieses dreiphasige Gemisch aus Trägergas, Tropfen und abzuscheidenden Partikeln in den Zykloninnenraum ein, so werden die großen Tropfen aufgrund der hohen Fliehkräfte im Zyklon an der Zyklonwand (5) abgeschieden. Auf dem Weg (6) zur Zylklonwand (5) werden natürlich noch weitere Partikel an den Tropfen abgeschieden. Dieser Vorgang wird umso effizienter, je mehr Tropfen in den Zykloninnenraum eintreten. Im Innenraum des Zyklons werden die feinen Partikel aufgrund der durch die bereits erwähnte Turbulenz induzierten Wechselwirkungen an den Tropfen abgeschieden. Die mit den Tropfen abgeschiedenen Partikel werden im Zyklon an der Innenwand durch die Konusgrenzschichtströmung in Richtung Bunker (7) transportiert. Ein Apexkegel (8) im Bunker dient hauptsächlich der Stabilisierung des Wirbels. Er soll aber auch ein Wiedereintreten der Tropfen in die Gasströmung verhindern. Der Gasstrom verläßt den Zyklon (1) durch ein Tauchrohr (9). Nach dem Zyklon (1), auf der Reingasseite (10) ist der Gasstrom tropfenfrei. Die pneumatischen Zweistoffdüsen (4) im Zyklonzulaufrohr (2) werden bevorzugt im Bereich von 3,0 bis 9,0 bar betrieben.

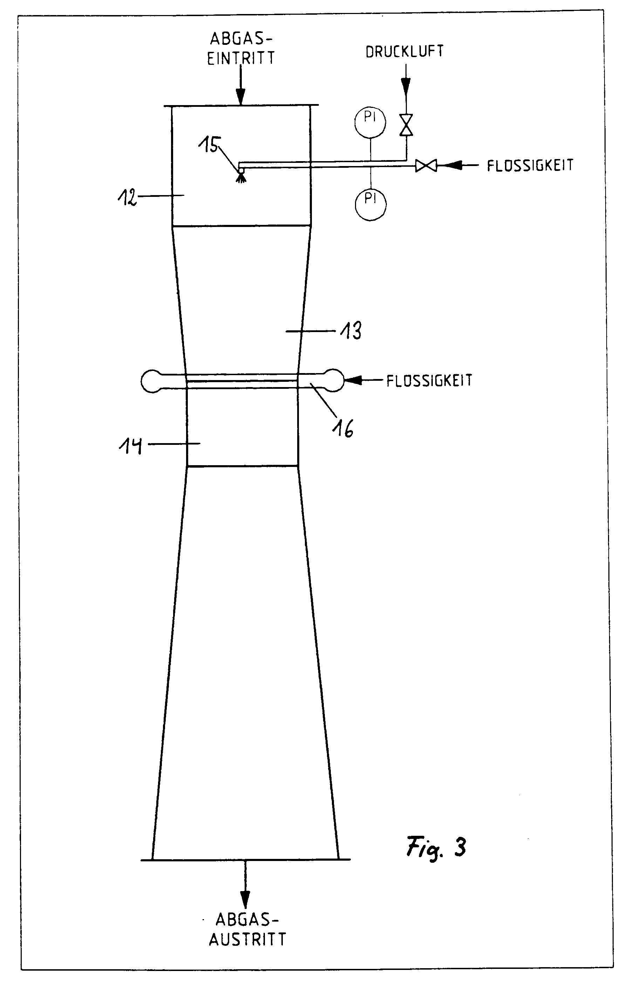

Bei der in Fig. 3 gezeigten Anlage gelangt der Rohgasstrom durch eine Rohrleitung (12) und einen konvergenten Venturieintritt (13) in die Venturikehle (14). Auf diesem Weg wird der Rohgasstrom mit feinsten Waschflüssigkeitstropfen angereichert, die von einer oder mehreren pneumatischen Zweistoffdüsen (15) erzeugt werden. Da die im Gleichstrom eingedüsten feinen Tropfen mit höherer Geschwindigkeit als Gasgeschwindigkeit den Düsenaustrittsbereich verlassen, werden die Partikel aufgrund von Trägheitseffekten und durch turbulente Diffusion an den Tropfen abgeschieden. Im konvergenten Venturieintritt (13) wird dann der Gasstrom mit den enthaltenen feinen Waschflüssigkeitstropfen beschleunigt. In der Venturikehle (14) und im anschließenden divergierenden Venturiaustritt werden diese Feintropfen und die noch enthaltenen Partikel durch die im Venturi eingebrachte Waschflüssigkeit (16) abgeschieden. Durch diesen Aufbau können sehr feine Partikel auch mit einem Venturi mit niedrigem oder mittlerem Druckverlust abgeschieden werden. Ein weiterer Vorteil dieses Aufbaues liegt darin, daß durch geeignete Anpassung der Betriebsparameter der pneumatischen Zweistoffdüsen die Abhängigkeit der Abscheideleistung von Venturiwäschern von der durchgesetzten Gasmenge kompensiert werden kann, und zwar so, daß bei sinkender Abscheideleistung des Venturiwäschers durch verringerten Gasdurchsatz die zusätzliche Abscheidung durch die pneumatischen Zweistoffdüsen z.B. durch erhöhten Düsendruck ausgeglichen wird.

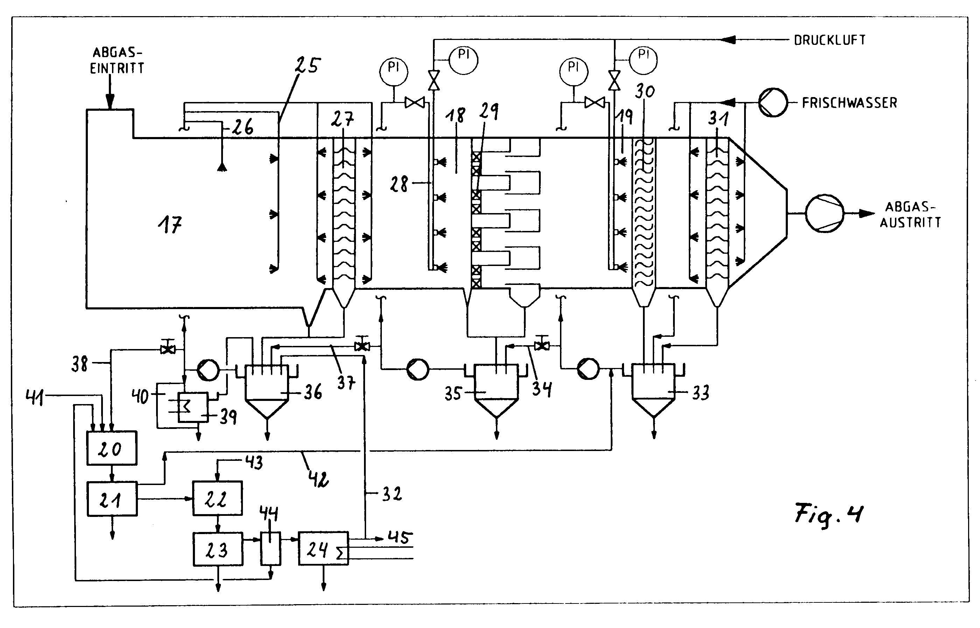

Die in Fig. 4 gezeigte dritte Ausführungsform der Anlage weist eine Gassättigungsstufe (17), eine zweistufige Partikelabscheidung (18), (19) und eine integrierte Abwasseraufbereitung (20) bis (24) auf die prinzipiell auch in den anderen Fällen in gleicher Weise in das Verfahren integriert werden kann. Dieser Aufbau ermöglicht einen abwasserfreien Betrieb. In dieser Konfiguration ist das Verfahren z.B. zur Entstaubung von Sinterabgasen geeignet. Der Gasstrom gelangt zuerst in einen Quench, wo er in bekannter Weise durch Eindüsung von Flüssigkeit im Gegenstrom (25) und/oder im Gleichstrom und/oder im Kreuzstrom (26) gesättigt wird. Die Differenz zwischen dem Dampfdruck der Waschflüssigkeit im eintretenden Gasstrom soll gering sein im Vergleich zum Sättigungsdampfdruck der Waschflüssigkeit im Eintrittszustand, damit von den Flüssigkeitströpfchen nicht zuviel verdampft. Ein austrittsseitiger Tropfenabscheider mit Abreinigungsdüsen (27) befindet sich zur gleichmäßigen Verteilung der Strömung direkt vor einer nachfolgenden Düsenebene (28), jener Partikelabscheidestufe, die hier als axial angeströmter Multizyklon (29) ausgeführt ist. Die Düsenlanzen, an denen die pneumatischen Zweistoffdüsen angebracht sind, werden dabei vorteilhafterweise so ausgeführt, daß jedem einzelnen Zyklon eine Zweistoffdüse zugeordnet wird.

Eine folgende Partikelabscheidestufe (30) ist als Lamellenabscheider ausgeführt. Bei der Verwendung eines Lamellenabscheiders muß sicher gestellt sein, daß durch den Abstand zwischen den Düsen und dem Lamellenabscheider eine flächendeckende Beaufschlagung des Lamellenabscheiders mit den Flüssigkeitstropfen gewährleistet ist. Hierbei kommt dem Sprühwinkel der Düsen eine besondere Bedeutung zu. Die Anordnung, die Geometrie und die Betriebsparameter der Zweistoffdüsen werden bevorzugt derart gewählt, daß sich dabei eine möglichst geringe Flugzeit der Tropfen vor dem Partikelabscheider ergibt, die vorzugsweise deutlich unter einer Sekunde liegt. Im Gesaustritt des Wäschers kann noch ein Tropfenabscheider mit Abreinigungsdüsen (31) zur Abscheidung feinster, noch im Gasstrom vorhandener Tropfen eingebaut werden.

Die Flüssigkeitskreisläufe der drei hintereinander geschalteten Aggregate sind voneinander getrennt, wobei erfindungsgemäß die Ergänzung der gesamten verdunsteten Flüssigkeitsmenge und der gesamten, zur Austragung von gelösten Stoffen aus dem Verfahren ausgeschleusten Flüssigkeitsmenge nur in der in Gasdurchlaufrichtung letzten Anlagenstufe durch eine Flüssigkeitszuführung (32) erfolgt. Aus dieser Stufe wird ein Teil der, über die Sedimentationsstufe (33) im Kreislauf geführten Flüssigkeit der vorhergeschalteten Stufe zugeführt (bei 34). Der Flüssigkeitskreislauf dieser Stufe bzw. der Sättigungsstufe ist mit einer Sedimentationsstufe (35) bzw. (36) und Ausschleusung (37) und (38) in die Sättigungsstufe bzw. eine Abwasserreinigungsanlage ähnlich aufgebaut. Dieser Aufbau stellt sicher, daß entgegen der Gasdurchlaufrichtung in den Flüssigkeitskreisläufen der Anlagenstufen die Konzentration der gelösten Stoffe ansteigt. Das ermöglicht eine Verringerung der Baugröße von Abwasserreinigungsanlage und Kristallisationsstufe bei gleichzeitig niedrig gehaltener Konzentration der gelösten Stoffe im Flüssigkeitskreislauf der in Gasdurchlaufrichtung letzten Anlagenstufe, so daß auch ein Austrag von abgeschiedenen Stoffen über den geringen Durchriß der von den pneumatischen Zweistoffdüsen erzeugten extrem feinen Tropfen minimal bleibt.

Weiters können durch die Trennung der Flüssigkeitskreisläufe in den einzelnen Kreisläufen verschiedene Eigenschatten der Kreislaufflüssigkeit, wie z.B. der pH-Wert und die chemische Zusammensetzung in Abhängigkeit von den durch Gasstrom und Partikel vorgegebenen Abscheideerfordernissen eingestellt werden.

Tritt in der Kreislaufflüssigkeit der ersten Stufe (17) ein verhältnismäßig hoher Anteil an gelösten Salzen, wie z.B. Kaliumchlorid auf, so wird erfindungsgemäß die Konzentration der Salze durch geeignete Einstellung der Ausschleusmengen (34) und (37) knapp unter dem Sattigungspunkt gehalten. Ein Teilstrom der Kreislaufflüssigkeit wird dann in einem separaten Kreislauf über ein gekühltes Kristallisationsbecken (39) geführt, in dem zur Verbesserung der Kristallisation mit einem Teil (40) der gewonnen Kristalle angeimpft wird. Die so gewonnenen Salze können einer Verwertung zugeführt werden. Durch diese Maßnahme kann die zur Ausschleusung von Schwermetallen und anderen gelösten Spurenstoffen notwendige aus dem Kreislauf zu entfernende Flüssigkeitsmenge (38) weiter reduziert werden.

Der ersten Fällungsstufe (20) der Abwasserreinigungsanlage werden neben der ausgeschleusten Kreislaufflüssigkeit noch Fällungschemikalien (41) wie Kalkmilch Natronlauge, Natriumsulfid, u.a. und fallweise Reststoffe - meist schwer deponierbare Abfälle, die noch Wertstoffe enthalten, z.B. Filterstaub aus einem Trockenfilter - zugegeben, wobei eine selektive Fällung von Wertstoffen je nach Zusammensetzung der gelösten Inhaltsstoffe der Flüssigkeit durch exakte Einstellung eines pH-Wertes oder durch Zugabe selektiver Fällungsmittel erfolgt. Die ausgefällten Wertstoffe z.B. bei der Reinigung von Sinterabgasen: Eisenfällung bei pH 3 bis 5 werden abgetrennt (siehe 21) und einer Verwertung zugeführt, der Klarlauf wird der Schwermetallfällung (22) zugeführt.

Ein Teil des Klarlaufes (42) der ersten Fällungsstufe wird in den Flüssigkeitskreislauf der letzten Partikelabscheidestufe (30) zurückgeführt. Mit dieser Rückführung (42) wird der pH-Wert der Flüssigkeit auf den gewünschten Wert eingestellt. In der Schwermetallfällungsstufe (22) werden unter weiterer Zugabe von Fällungschemikalien (43) die enthaltenen Schwermetalle ausgefällt. Die Schwermetalle werden abgetrennt (siehe 23) und der verbleibende Klarlauf wird, falls keine anderweitige Verwertungsmöglichkeit dafür besteht, einer Kristallisationsstufe (24) zugeführt, der zur Gewinnung von reineren Salzen fallweise eine Umsalzstufe (44) vorgeschaltet ist, wo beispielsweise Kalziumionen durch Zugabe von Natriumkarbonat oder Kohlendioxid abgetrennt werden. Die abgetrennte Kalziumkarbonatsuspension wird dann in die erste Fällungsstufe (20) zurückgeführt.

In der Kristallisationsstufe (24) werden die gelösten Stoffe zur Gänze oder teilweise auskristallisiert, wobei bei teilweiser Kristallisation die verbleibende konzentrierte Flüssigkeit in den Flüssigkeitskreislauf der Gassättigungsstufe zurückgeführt wird. Falls sich im System unerwünschte Spurenstoffe, die in den Fällungsstufen nicht abgetrennt werden anreichern, wird der Kristallisationsstufe eine geringe Flüssigkeitsmenge entnommen (siehe 45), die zur Entsorgung eingedampft oder in geeigneter Weise behandelt werden muß.

Von besonderer Bedeutung für die Partikelabscheidung ist das eingesetzte Zerstäubungsverfahren. In den in den Fig. 1 bis 4 beschriebenen Anlagen werden die eingesetzten Zweistoffdüsen mit Druckluft und Kreislaufflüssigkeit -z.B. Wasser oder hochsiedender organischer Flüssigkeit - betrieben. Es handelt sich dabei um pneumatische Zweistoffdüsen mit äußerer bzw. innerer Vermischung. Bei der Düse mit äußerer Mischung können der Flüssigkeits- und der Druckluftstrom getrennt voneinander variiert werden. Begrenzende Faktoren für den Betrieb sind lediglich der Druckverlust am Gas- bzw. Flüssigkeitsaustritt. Bei der Düse mit innerer Mischung beeinflussen sich Gas- und Flüssigkeitsstrom gegenseitig. Die verwendete Düse mit innerer Mischung zeichnet sich durch einen hohen Vermischungsgrad bereits innerhalb des Düsenkörpers und eine optimierte Strahlaustrittsgeometrie aus. Die so entstehende Vordispersion aus Flüssigkeits- und Gasphase besitzt eine niedrigere kritische Geschwindigkeit als die Einzelphasen. Dadurch treten geringere Reibungs- und Beschleunigungsverluste auf als bei Düsen mit äußerer Vermischung. Diese Düsen besitzen deshalb eine wesentlich bessere Energieausnutzung als herkömmliche Zerstäubungseinrichtungen (z.B. Einstoff-Druckdüsen), bei denen zum Teil mehr als 99 % der Druckenergie in kinetische Energie umgesetzt wird.

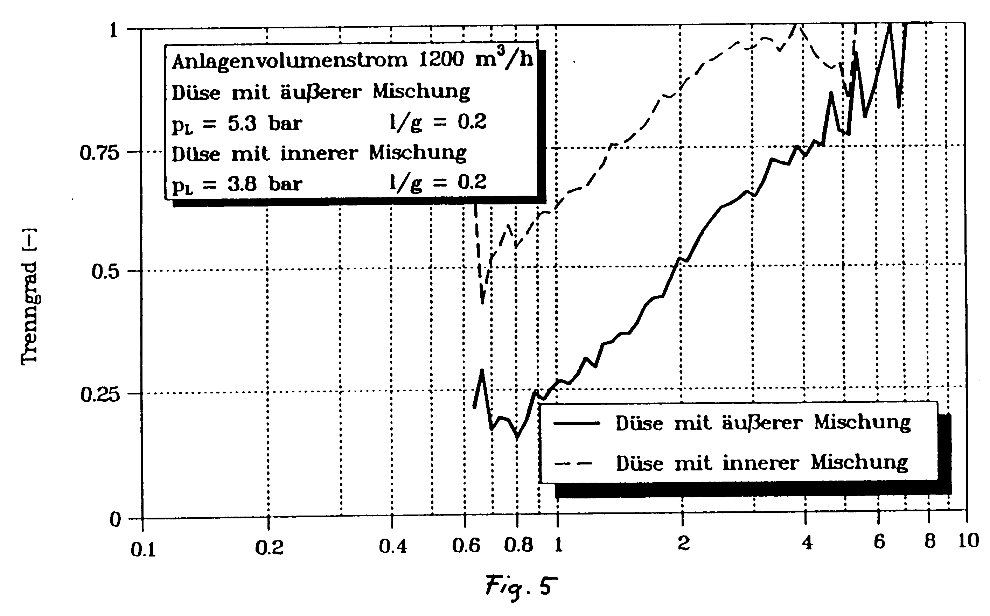

Der Einfluß auf das Abscheideergebnis geht aus Versuchsergebnissen, die in Fig. 5 dargestellt sind, hervor. Die Betriebsparameter der durch die Kurven erfaßten Versuche (Partikelabscheideaggregat: tangential angeströmter Zyklon) lauten wie folgt:
- Abgasmenge im Normzustand:: 1200 m3/h
- Wasserbedarf L/G:: 0,2 l/m3
- Abgastemperatur:: 20 °C
- Düse mit innerer Mischung:: 4,8 bar absolut
- Düse mit äußerer Mischung:: 6,3 bar absolut

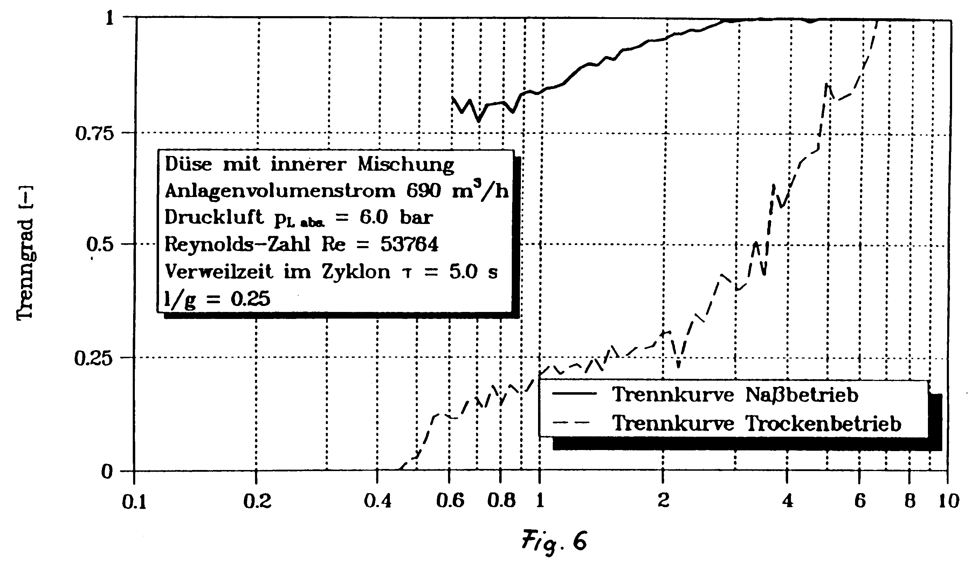

Die Düse mit innerer Mischung wurde dabei noch nicht einmal bei dem erfahrungsgemäß vorteilhaften Druckluftdruck von 5,0 bis 7,0 bar betrieben, um einen Vergleich mit der Düse mit äußerer Mischung zu ermöglichen. Auch bei anderen Versuchen hat sich gezeigt, daß der Abscheideerfolg unmittelbar an die Qualität der Zerstäubungseinrichtung, d.h. an eine Düse mit innerer Vermischung gekoppelt ist. Betreibt man die in Fig. 1 gezeigte Anlage unter Verwendung einer pneumatischen Zweistoffdüse mit innerer Mischung unter den erfindungsgemäßen vorteilhafen Bedingungen:
- Abgasmenge im Normzustand:: 690 m3/h
- Wasserbedarf L/G:: 0,25 l/m3
- Rohgaskonzentration:: 204,9 mg/m3
- Düse mit innerer Mischung:: 5,07 bar absolut,
so ergeben sich die in Fig. 6 dargestellten Trennkurven. Die Abscheideleistung der in Fig.1 gezeigten erfindungsgemäßen Anlage wurde sowohl mit einem optischen Partikelzähler als auch mit einem gravimetrischen Meßverfahren gemäß VDI Richtlinie 2066 überprüft. Im dargestellten Fall betrug der Gesamtabscheidegrad 99,2%.

## Patentansprüche

1. Verfahren zur Abscheidung fester und/oder flüssiger Partikel, insbesondere mit kleinem Durchmesser, und/oder gasförmiger Komponenten aus einem Gasstrom durch gasdurchströmte Partikelabscheideaggregate (1, 11, 18, 19), deren Abscheidewirkung durch den Einsatz von feinst zerstäubter Waschflüssigkeit unterstützt wird, wobei der Gasstrom einem oder mehreren nebeneinander und/oder nacheinander angeordneten Partikelabscheideaggregaten (1, 11, 18, 19) zugeführt wird, in dessen bzw. deren Gaszuleitung (2) unmittelbar vor jedem gasdurchströmten Partikelabscheideaggregat (1, 11, 18, 19) Waschflüssigkeit mittels einer oder mehrerer pneumatischer, getrennt mit Zerstäubungsgas und Waschflüssigkeit angespeister Zweistoffdüsen (4, 15, 28) in Gasströmungsrichtung eingedüst wird,
dadurch gekennzeichnet, daß der zu reinigende Gasstrom vor dem Einbringen der Waschflüssigkeit mittels einer Gassättigungsstufe (17) mit Flüssigkeit gesättigt wird und die Geschwindigkeit der die Zweistoffdüsen (4, 15, 28) verlassenden Waschflüssigkeit höher ist als die Gasstromgeschwindigkeit.

2. Verfahren nach Anspruch 1, dadurch gekennzeichnet, daß als Partikelabscheideaggregat (1, 11, 18, 19) ein tangential angeströmter Zyklon, ein axial angeströmter Zyklon oder ein tangential oder axial angeströmter Multizyklon verwendet wird.

3. Verfahren nach Anspruch 1, dadurch gekennzeichnet, daß als Partikelabscheideaggregat (1, 11, 18, 19) ein Massekraftabscheider, vorzugsweise ein Prallabscheider, Lamellenabscheider oder Ringspaltabscheider verwendet wird.

4. Verfahren nach Anspruch 1, dadurch gekennzeichnet, daß als Partikelabscheideaggregat (1, 11, 18, 19) ein Wäscher, vorzugsweise ein Venturiwäscher, Wirbelwäscher oder Ringspaltwäscher verwendet wird.

5. Verfahren nach einem der Ansprüche 1 bis 4, gekennzeichnet durch Zweistoffdüsen (4, 15, 28) mit innerer Vermischung.

6. Verfahren nach einem der Ansprüche 1 bis 4, dadurch gekennzeichnet, daß die Betriebsparameter der pneumatischen Zweistoffdüsen (4), insbesondere der Düsendruck, in Abhängigkeit von der Abscheideleistung des Partikelabscheideaggregates (1, 11, 18, 19) von der durchgesetzten Gasmenge gesteuert werden.

7. Verfahren nach Anspruch 1, dadurch gekennzeichnet, daß dem Gasstrom vor Eintritt in die Gassättigungsstufe (17) oder erste Partikelabscheidestufe (8) oder der Kreislaufwaschflüssigkeit der Gassättigungsstufe (17) feingemahlene schadstoffbindende Feststoffe zugegeben werden.

8. Verfahren nach einem der Ansprüche 1 bis 7, dadurch gekennzeichnet, daß eine mehrstufige Kreislaufflüssigkeitsaufbereitung in die Gasreinigungsanlage integriert wird, bei der die einzelnen Flüssigkeitskreisläufe eines jeden Partikelabscheideaggregates (1, 11, 18, 19) voneinander vollkommen getrennt sind.

9. Verfahren nach Anspruch 8, dadurch gekennzeichnet, daß in einen oder mehreren der getrennten Flüssigkeitskreisläufe jeweils eine Sedimentationsstufe (33, 35, 36) zur Abtrennung der enthaltenen ungelösten Partikel geschaltet ist.

10. Verfahren nach Anspruch 8 oder 9, dadurch gekennzeichnet, daß die Konzentration an gelösten Stoffen in den Kreislaufflüssigkeiten hintereinandergeschalteter Verfahrensstufen der Kreislaufflüssigkeitsaufbereitung entgegen der Gasdurchlaufrichtung durch kontrollierte Flüssigkeitsüberleitung (37) in die jeweils vorhergeschaltete Stufe, durch alleinige Ergänzung von verdunsteter Flüssigkeit in der in Gasdurchlaufrichtung letzten Partikelabscheidestufe (30) und durch alleinige Flüssigkeitsausschleusung (38) zum Austrag von gelösten Stoffen aus der ersten Verfarhrensstufe der Kreislaufflüssigkeitsaufbereitung zunimmt.

11. Verfahren nach einem der Ansprüche 8 bis 10, dadurch gekennzeichnet, daß die Konzentration an gelösten Salzen in der in Gasdurchlaufrichtung ersten Stufe der Kreislaufflüssigkeitsaufbereitung knapp unter der Löslichkeitsgrenze gehalten wird und daß ein Teil der Kreislaufflüssigkeit dieser Stufe über ein gekühltes Kristallisationsbecken (39) im Kreis geführt wird.

12. Verfahren nach Anspruch 11, dadurch gekennzeichnet, daß die zur Austragung von gelösten Stoffen ausgeschleuste Flüssigkeitsmenge durch mehrstufige Aufbereitung aufgearbeitet wird, wobei durch kontrollierte Zugabe von Fällungschemikalien (41, 43) in mehreren Stufen (20, 22) die in der Flüssigkeit gelösten Wertstoffe und Schwermetalle nacheinander ausgefällt und gewonnen werden.

13. Verfahren nach Anspruch 12, dadurch gekennzeichnet, daß in einer oder mehreren Fällungsstufen (20, 22) zusätzlich noch wertstoffhaltige Reststoffe zur Aufarbeitung zugegeben werden.

14. Verfahren nach Anspruch 12, dadurch gekennzeichnet, daß ein Teil des Klarlaufes (42) der ersten Fällungsstufe (20) in den Flüssigkeitskreislauf der in Gasdurchlaufrichtung letzten Partikelabscheidestufe (30) zur Einstellung des gewünschten pH-Wertes der Kreislaufflüssigkeit geleitet wird.

15. Verfahren nach Anspruch 12, dadurch gekennzeichnet, daß der Klarlauf der letzen Fällungsstufe (22) einer Kristallisationsstufe (24) zur Gewinnung der gelösten Salze zugeführt wird, wobei wahlweise eine teilweise Eindampfung mit Rückführung der verbleibenden Flüssigkeit in den Flüssigkeitskreislauf der Gassättigungsstufe (17) oder ersten Partikelabscheidestufe (19) oder eine vollständige Eindampfung des Klarlaufes durchgeführt wird.

16. Verfahren nach Anspruch 15, dadurch gekennzeichnet, daß vor der Kristallisationsstufe (24) eine geeignete Umsalzungsstufe, vorzugsweise eine Fällung von Kalziumkarbonat mit Kohlendioxid oder einem löslichen Karbonat mit Rückführung der gewonnenen Kalziumkarbonatsuspension in die erste Fällungsstufe (20), vorgeschaltet wird.

17. Verfahren nach Anspruch 12, dadurch gekennzeichnet, daß der Klarlauf der letzten Fällungsstufe (22) einem Sprühtrockner zugeführt wird.

18. Anlage zur Durchführung des Verfahrens nach Anspruch 1, dadurch gekennzeichnet, daß die Anlage ein oder mehrere nebeneinander und/oder nacheinander angeordneten Partikelabscheideaggregate (1, 11, 18, 19) aufweist, daß jedem gasdurchströmten Partikelabscheideaggregat (1, 11, 18, 19) in Gasströmungsrichtung eine oder mehrere pneumatische Zweistoffdüsen (4, 15, 28) unmittelbar vorgeschaltet sind, die die Waschflüssigkeit in Gasströmungsrichtung in den Gasstrom in feinstgeteilter Form eindüsen, wobei jede Zweistoffdüse (4, 15, 28) getrennt mit Zerstäubungsgas und Waschflüssigkeit angespeist wird, und daß zur Sättigung des Gasstromes mit Flüssigkeit in Gasströmungsrichtung vor der ersten Zweistoffdüse (28) eine Gassättigungsstufe (17) vorgesehen ist.

19. Anlage nach Anspruch 18, dadurch gekennzeichnet, daß eine oder mehrere Zweistoffdüsen (4, 15, 28) in einer vorzugsweise normal zur Gasströmungsrichtung liegenden Düsenebene, oder mehrere Zweistoffdüsen und/oder Düsenebenen hintereinander und/oder räumlich versetzt in der Gaszuleitung des Partikelabscheideaggregates angeordnet sind.

20. Anlage nach Anspruch 18, dadurch gekennzeichnet, daß jede Partikelabscheidestufe (18, 19) mit einer mehrstufigen Kreislaufflüssigkeitsaufbereitungsvorrichtung verbunden ist, und daß die einzelnen Kreislaufflüssigkeitsaufbereitungsvorrichtungen voneinander vollkommen getrennt sind.

21. Anlage nach Anspruch 20, dadurch gekennzeichnet, daß in eine oder mehrere der getrennten Flüssigkeitskreisläufe jeweils eine Sedimentationsstufe (33, 35, 36) eingebaut ist.

22. Anlage nach Anspruch 20, dadurch gekennzeichnet, daß in der in Gasdurchlaufrichtung ersten Kreislaufflüssigkeitsaufbereitungsvorrichtung (17) für einen Teil der Kreislaufflüssigkeit ein gekühltes Kristallisationsbecken (39) vorgesehen ist.

23. Anlage nach Anspruch 18, dadurch gekennzeichnet, daß zur Sättigung des Gasstromes mit Flüssigkeit ein Quench eingesetzt ist, und daß sich der in der Gasaustrittsleitung des Quench befindliche Tropfenabscheider (27) direkt vor der ersten Zweistoffdüse oder Düsenebene (28) des nachfolgenden Partikelabscheideaggregates (18) befindet, wodurch sich für diese Zweistoffdüse oder Düsenebene (28) eine sehr gleichmäßige Gasströmung ergibt.

## Claims

1. A process for separating solid and/or liquid particles, in particular of small diameter, and/or gaseous components from a gas stream by particle-separation units (1,11,18,19) through which gas flows, the separating action of which is assisted by the use of very finely atomised washing liquid, wherein the gas stream is fed to one or more particle-separation units (1,11,18,19) arranged side by side and/or successively, and into the gas inlet (2) of which unit or units washing liquid is sprayed in the gas stream direction directly upstream of each particle-separation unit (1,11,18,19) through which gas flows, by means of one or more pneumatic two component nozzles (4,15,28) supplied separately with atomising gas and washing liquid, characterised in that before the admission of the washing liquid the gas stream to be purified is saturated with liquid by means of a gas saturation stage (17), and the velocity of the washing liquid leaving the two component nozzles (4,15,28) is higher than the gas-stream velocity.

2. A process according to Claim 1, characterised in that, as a particle-separation unit (1,11,18,19), a tangential inflow cyclone, an axial inflow cyclone or a multicyclone with tangential or axial inflow is used.

3. A process according to Claim 1, characterised in that, as a particle-separation unit (1,11,18,19), an inertial separator, preferably an impingement separator, lamellar separator or annular clearance separator is used.

4. A process according to Claim 1, characterised in that, as a particle-separation unit (1,11,18,19), a washer, preferably a venturi scrubber, vortex washer or annular clearance washer is used.

5. A process according to any one of Claims 1 to 4, characterised by two component nozzles (4,15,28) with internal mixing.

6. A process according to any one of Claims 1 to 4, characterised in that the operating parameters of the pneumatic two component nozzles (4), in particular the nozzle pressure, are controlled by the amount of gas handled as a function of the separation capacity of the particle-separation unit (1,11,18,19).

7. A process according to Claim 1, characterised in that finely ground solids binding contaminants are added to the gas stream, before entering the gas saturation stage (17) or first particle-separation stage (8), or to the recirculating washing liquid of the gas saturation stage (17).

8. A process according to any one of Claims 1 to 7, characterised in that a multistage recirculating liquid treatment is integrated into the gas-purification installation, in which the individual liquid circuits of each particle-separation unit (1,11,18,19) are completely separate from one another.

9. A process according to Claim 8, characterised in that a respective sedimentation stage (33,35,36) for separating the undissolved particles contained is connected into one or more of the separate liquid circuits.

10. A process according to Claim 8 or 9, characterised in that the concentration of dissolved substances in the recirculating liquids of successively connected process stages of the recirculating liquid treatment increases counter to the gas passage direction by controlled liquid transfer (37) into the respective upstream stage, by a single supplement of evaporated liquid in the last particle-separation stage (30) in the gas passage direction and by a single liquid discharge (38) for the discharge of dissolved substances from the first process stage of the recirculating liquid treatment.

11. A process according to any one of Claims 8 to 10, characterised in that the concentration of dissolved salts in the first stage of the recirculating liquid treatment in the gas passage direction is maintained just below the solubility limit, and in that a portion of the recirculating liquid of this stage is put into the circuit via a cooled crystallisation tank (39).

12. A process according to Claim 11, characterised in that the quantity of liquid discharged for the discharge of dissolved substances is treated by multistage treatment, wherein by controlled addition of precipitation chemicals (41,43) in a plurality of stages (20,22) the valuable products and heavy metals dissolved in the liquid are successively precipitated and recovered.

13. A process according to Claim 12, characterised in that in one or more precipitation stages (20,22) residual substances additionally containing valuable products are added for treatment.

14. A process according to Claim 12, characterised in that a portion of the clear run (42) of the first precipitation stage (20) is directed into the liquid circuit of the last particle-separation stage (30) in the gas passage direction so as to adjust the desired pH value of the recirculating liquid.

15. A process according to Claim 12, characterised in that the clear run of the last precipitation stage (22) is fed to a crystallisation stage (24) to recover the dissolved salts, wherein either partial evaporation with recycling of the remaining liquid into the liquid circuit of the gas saturation stage (17) or first particle-separation stage (19) or complete evaporation of the clear run is carried out.

16. A process according to Claim 15, characterised in that, upstream of the crystallisation stage (24), a suitable resalting stage, preferably a precipitation of calcium carbonate with carbon dioxide or a soluble carbonate with recycling of the recovered calcium carbonate suspension is series-connected into the first precipitation stage (20).

17. A process according to Claim 12, characterised n that the clear run of the first precipitation stage (22) is fed to a spray drier.

18. An installation for carrying out the process according to Claim 1, characterised in that the installation has one or more particle-separation units (1,11,18,19) arranged side by side or successively, in that in the gas stream direction one or more pneumatic two component nozzles (4,15,28) are connected directly upstream of each particle-separation unit (1,11,18,19) through which gas flows, which nozzles spray the washing liquid in very finely divided form in the gas stream direction into the gas stream, wherein each two component nozzle (4,15,28) is supplied separately with atomising gas and washing liquid, and in that to saturate the gas stream with liquid in the gas stream direction a gas-saturation stage is provided upstream of the first two component nozzle (28).

19. An installation according to Claim 18, characterised in that one or more two component nozzles (4,15,28) are arranged in a nozzle plane preferably disposed normal to the gas stream direction, or a plurality of two component nozzles and/or nozzle planes are arranged successively and/or spatially offset in the gas inlet of the particle separation unit.

20. An installation according to Claim 18, characterised in that each particle separation stage (18,19) is connected to a multistage recirculating liquid treatment device, and in that the individual recirculating liquid treatment devices are completely separate from one another.

21. An installation according to Claim 20, characterised in that a respective sedimentation stage (33,35,36) is incorporated into one or more of the separate liquid circuits.

22. An installation according to Claim 20, characterised in that in the first recirculating liquid treatment device (17) in the gas passage direction a cooled crystallisation tank (39) is provided for a portion of the recirculating liquid.

23. An installation according to Claim 18, characterised in that to saturate the gas stream with liquid a quench is inserted and the spray eliminator (27) situated in the gas-outlet duct of the quench is disposed directly upstream of the first two component nozzle or nozzle plane (28) of the following particle separation unit (18), whereby there is a very uniform gas stream for this two component nozzle.

## Revendications

1. Procédé de séparation de particules solides et/ou liquides, en particulier de petit diamètre, et/ou de composants gazeux dans un flux de gaz, au moyen d'unités de séparation de particules (1, 11, 18, 19) parcourues par le gaz, dont l'effet séparateur est renforcé par l'emploi d'un liquide de lavage finement dispersé, le flux de gaz étant amené à une ou plusieurs unités de séparation de particules (1, 11, 18, 19) disposées l'une à côté de l'autre et/ou l'une après l'autre et dont la conduite d'alimentation de gaz (2) placée immédiatement avant chaque unité de séparation de particules (1, 11, 18, 19) se voit injecter un liquide de lavage suivant le sens du flux de gaz, au moyen d'un ou plusieurs injecteurs pneumatiques à deux matières (4, 5, 28) alimentés séparément en gaz de diffusion et liquide de lavage, caractérisé en ce que le flux de gaz à épurer est saturé de liquide avant introduction du liquide de lavage, au moyen d'une étape de saturation de gaz (17) et en ce que la vitesse du liquide de lavage quittant les injecteurs à deux matières (4, 5, 28) est supérieure à la vitesse du flux de gaz.

2. Procédé selon la revendication 1, caractérisé en ce qu'on utilise comme unité de séparation de particules (1, 11, 18, 19) un cyclone à soufflage tangentiel, un cyclone à soufflage axial ou un multicyclone à soufflage tangentiel ou axial.

3. Procédé selon la revendication 1, caractérisé en ce qu'on utilise comme unité de séparation de particules (1, 11, 18, 19) un séparateur à force d'inertie, de préférence un séparateur à impact, un séparateur à lamelles ou un séparateur annulaire.

4. Procédé selon la revendication 1, caractérisé en ce qu'on utilise comme unité de séparation de particules (1, 11, 18, 19) un laveur, de préférence un laveur à venturi, un laveur à tourbillon ou un laveur annulaire.

5. Procédé selon l'une des revendications 1 à 4, caractérise par des injecteurs à deux matières (4, 15, 28) à mélange interne.

6. Procédé selon l'une des revendications 1 à 4, caractérisé en ce qu'on règle les paramètres de service des injecteurs pneumatiques à deux matières (4), en particulier la pression des injecteurs, par la quantité de gaz débitée, en fonction de la puissance séparatrice de l'unité de séparation de particules (1, 11, 18, 19).

7. Procédé selon la revendication 1, caractérisé en ce qu'on ajoute au flux de gaz avant l'entrée dans l'étape de saturation de gaz (17) ou à la première étape de séparation de particules (8), ou au liquide de lavage recyclé de l'étape de saturation de gaz (17), des matières solides finement broyées qui neutralisent les produits polluants.

8. Procédé selon l'une des revendications 1 à 7, caractérisé en ce qu'on intègre dans l'installation d'épuration de gaz un traitement du liquide recyclé en plusieurs étapes, dans lequel les différents circuits de liquide de chaque unité de séparation de particules (1, 11, 18, 19) sont totalement séparés l'un de l'autre.

9. Procédé selon la revendication 8, caractérisé en ce qu'une étape de sédimentation (33, 35, 36) est insérée dans un ou plusieurs des circuits de liquide séparés pour dissocier les particules en suspension contenues.

10. Procédé selon la revendication 8 ou 9, caractérisé en ce que la concentration de matières dissoutes, dans les liquides recyclés d'étapes de procédé consécutives du traitement du liquide recyclé en sens inverse du passage de gaz, augmente grâce au transfert de liquide contrôlé (37) dans l'étape en amont, grâce au seul complément de liquide évaporé dans la dernière étape de séparation de particules (30) suivant le sens du passage de gaz et grâce à la seule évacuation de liquide (38) pour extraire les matières dissoutes de la première étape du traitement du liquide recyclé.

11. Procédé selon l'une des revendications 8 à 10, caractérisé en ce que la concentration de sels dissous, dans la première étape du traitement du liquide recyclé suivant le sens du passage de gaz, est maintenue tout juste au-dessous du seuil de solubilité et en ce qu'une fraction du liquide recyclé de cette étape est véhiculée dans le circuit grâce à un bassin de cristallisation réfrigéré (39).

12. Procédé selon la revendication 11, caractérisé en ce que la quantité de liquide évacuée pour extraire des matières dissoutes fait l'objet d'un traitement en plusieurs étapes, l'addition contrôlée de précipitants chimiques (41, 43) dans plusieurs étapes permettant de successivement précipiter et de récupérer les matières valables et les métaux lourds.

13. Procédé selon la revendication 12, caractérisé en ce qu'on ajoute en supplément dans une ou plusieurs étapes de précipitation (20, 22) des matières résiduelles contenant des matières valables pour le traitement.

14. Procédé selon la revendication 12, caractérisé en ce qu'une fraction du liquide clarifié (42) de la première étape de précipitation (20) est dirigée dans le circuit de liquide de la dernière étape de séparation de particules (30) suivant le sens du passage de gaz, afin de régler le pH recherché du liquide recyclé.

15. Procédé selon la revendication 12, caractérisé en ce que le liquide clarifié de la dernière étape de précipitation (22) est amené à une étape de cristallisation (24) pour récupérer les sels dissous, en procédant au choix à une évaporation partielle avec retour du liquide restant dans le circuit de liquide de l'étape de saturation de gaz (17) ou de la première étape de séparation de particules (19), ou à une évaporation complète du liquide clarifé.

16. Procédé selon la revendication 15, caractérisé en ce que l'étape de cristallisation (24) est précédée d'une phase appropriée de double décomposition des sels, de préférence d'une précipitation de carbonate de calcium au dioxyde de carbone ou par un carbonate soluble, avec retour de la suspension de carbonate de calcium dans la première étape de précipitation (20).

17. Procédé selon la revendication 12, caractérisé en ce que le liquide clarifié de la dernière étape de précipitation (22) est amené à un séchoir par pulvérisation.

18. Installation pour la mise en oeuvre du procédé selon la revendication 1, caractérisée en ce que l'installation comporte une ou plusieurs unités de séparation de particules (1, 11, 18, 19) disposées l'une à côté de l'autre et/ou l'une après l'autre, en ce qu'un ou plusieurs injecteurs pneumatiques à deux matières (4, 15, 28) sont placés suivant le sens du flux de gaz, immédiatement avant chaque unité de séparation de particules (1, 11, 18, 19) parcourue par le gaz, lesquels injecteurs injectent le liquide de lavage finement dispersé, suivant le sens du flux de gaz, dans le flux de gaz, chaque injecteur à deux matières (4, 15, 28) étant alimenté séparément en gaz de diffusion et liquide de lavage, et en ce qu'une étape de saturation de gaz (17) est prévue avant le premier injecteur à deux matières (28) pour saturer le flux de gaz de liquide suivant le sens du flux de gaz.

19. Installation selon la revendication 18, caractérisée en ce qu'un ou plusieurs injecteurs à deux matières (4, 15, 28) sont disposés dans la conduite d'alimentation de gaz de l'unité de séparation de particules, dans un plan d'injecteurs de préférence normal par rapport au sens du flux de gaz, ou plusieurs injecteurs à deux matières et/ou plans d'injecteurs y sont disposés l'un après l'autre et/ou de façon décalée dans l'espace.

20. Installation selon la revendication 18, caractérisée en ce que chaque étape de séparation de particules (18, 19) est reliée à un dispositif de traitement du liquide recyclé en plusieurs étapes et en ce que les différents dispositifs de traitement du liquide recyclé sont totalement séparés les uns des autres.

21. Installation selon la revendication 20, caractérisée en ce qu'une étape de sédimentation (33, 35, 36) est intégrée dans un ou plusieurs des circuits de liquide séparés.

22. Installation selon la revendication 20, caractérisée en ce que le premier dispositif de traitement de liquide recyclé (17) suivant le sens du passage de gaz comporte un bassin de cristallisation réfrigéré (39) pour une partie du liquide recyclé.

23. Installation selon la revendication 18, caractérisée en ce qu'on utilise un système de refroidissement pour saturer le flux de gaz de liquide et en ce que le pare-gouttes (27) situé dans la conduite d'évacuation de gaz du système de refroidissement se trouve immédiatement avant le premier injecteur à deux matières ou plan d'injecteurs (28) de l'unité de séparation de particules (18), ce qui permet d'obtenir un flux de gaz très homogène pour cet injecteur à deux matières ou ce plan d'injecteurs (28).
